Europäisches Patentamt

**European Patent Office**

**Office européen des brevets**

(11) Numéro de publication: **0 160 584**
**A1**

## (12) DEMANDE DE BREVET EUROPEEN

(21) Numéro de dépôt: 85400382.9

(22) Date de dépôt: 28.02.85

(51) Int. Cl.⁴: **A 47 J 37/12**
**A 47 J 27/18**

(30) Priorité: 13.03.84 FR 8403974
14.02.85 FR 8502388

(43) Date de publication de la demande:
**06.11.85 Bulletin 85/45**

(84) Etats contractants désignés:
**AT BE CH DE GB IT LI LU NL SE**

(71) Demandeur: **Bezon, Jacques**
**Campagne Chantavert**
**F-83880 Meounes(FR)**

(72) Inventeur: **Bezon, Jacques**
**Campagne Chantavert**
**F-83880 Meounes(FR)**

(74) Mandataire: **Hautier, Jean-Louis**
**OFFICE MEDITERRANEEN DE BREVETS D'INVENTION 24**
**rue Masséna**
**F-06000 Nice(FR)**

(54) **Appareil automatique pour la cuisson en continu de portions alimentaires individuelles par ébullition et/ou friture, pour la restauration et son procédé de mise en oeuvre.**

(57) Les paniers suspendus (40) sont guidés d'une part par une rampe de guidage supérieure (42), en contact avec le crochet (44) ou le corps du panier suspendu (40), qui assure la variation d'écartement dudit panier (4) de son axe vertical (45) passant par ledit crochet (44) et d'autre part par une rampe inférieure (47) qui assure le guidage et le maintien ou l'ouverture de la paroi du fond du panier qui est monté libre sur une charnière (49).

L'invention s'applique notamment à la restauration.

FIG 1

0160584

L'invention a pour objet un appareil automatique pour la cuisson en continu de portions alimentaires individuelles, par ébullition et/ou friture pour la restauration et son procédé de mise en oeuvre.

Il est notoire que la cuisine pour collectivité perd souvent en qualité, non pas obligatoirement par les ingrédients utilisés, mais du fait de la trop grande quantité d'aliments cuits en même temps. D'autres facteurs peuvent également intervenir en dehors de la cuisson, tels que : le refroidissement, la trop grande dimension des plats, etc...

Actuellement, les aliments cuits par ébullition et/ou friture, par exemple dans de l'huile ou de l'eau, sont cuits à l'avance dans des plats de grande capacité et selon la demande des clients, lesdits aliments sont réchauffés.

L'invention tend à résoudre ces problèmes, elle n'a pas pour objet de résoudre des problèmes liés à la cuisine industrielle.

Par contre, pour la restauration, l'invention permet de cuire des portions alimentaires individuelles à la demande de chaque client du restaurant.

L'appareil selon l'invention comporte une cuve qui contient le liquide qui est porté à ébullition et/ou friture par un moyen de chauffe ; les portions alimentaires individuelles à cuire sont disposées dans des paniers, lesdits paniers sont portés par un chemin de roulement pour être immergés dans ladite cuve, pendant un temps prédéterminé et réglable, ledit chemin de roulement oblige les paniers à passer dans un passage obligé mécanique qui vide lesdits paniers de leurs portions alimentaires, lesdites portions alimentaires cuites, tombent au fur et à mesure dans des assiettes chaudes qui sont mises automatiquement sous le point de chute de la portion alimentaire cuite.

Ledit vidage des portions alimentaires cuites des paniers peut se faire par retournement desdits paniers ou par l'ouverture d'une des parois ou du fond.

Les paniers sont ouverts à leur sommet et tous les autres paniers et le fond sont perforés de nombreux trous. Le panier peut comporter un bras ou ergot, qui, lorsque celui-ci arrive au niveau du passage obligé, actionne un moyen pour vider ledit panier de la portion alimentaire cuite.

Ledit bras ou ergot du panier peut entraîner le retournement par rotation pour que celui-ci se vide par sa partie supérieure qui est ouverte.

Ledit bras ou ergot peut également provoquer l'ouverture du fond du panier qui est alors amovible. Ainsi, le fond du panier peut être monté sur une charnière, sur l'axe de laquelle est monté solidaire ledit bras.

Lesdits paniers peuvent être suspendus "en noria" à la périphérie d'une roue horizontale, dite roue porte-parniers, dont la rotation au-dessus de la cuve permet d'immerger lesdits paniers, de les faire circuler dans le liquide bouillant, puis de les égoutter.

Un passage obligé mécanique assure l'ouverture du fond des paniers en basculant le bras qui est fixé sur l'axe, qui forme la charnière du fond dudit panier.

Un entonnoir de déverse reçoit la portion alimentaire cuite qui tombe du panier.

Une autre roue horizontale, qui tourne dans le sens contraire de la première roue porte paniers et qui est disposée dans un plan inférieur, porte les assiettes chaudes qui viennent en regard de l'entonnoir de déverse et ce, juste au moment où la portion alimentaire cuite d'un panier est déversée.

Des moteurs assurent la rotation de la roue porte paniers et de la roue porte-assiettes et ce d'une manière synchrone.

Le procédé de mise en oeuvre de l'appareil consiste à :

- remplir, par la partie supérieure, les paniers de produits alimentaires (par exemple des pâtes fraîches ou des frites)

- les moteurs assurent la rotation des roues, l'une assure la cuisson par trempage dans le liquide en ébullition et/ou friture dans la cuve, l'autre porte les assiettes qui sont remplies au fur et à mesure d'une portion alimentaire cuite. Le procédé permet de faire cuire les aliments par ébullition et/ou friture et ce d'une manière continue, automatique, portion par portion.

Les phases du procédé sont les suivantes :

- passage à l'air libre des paniers par remplissage manuel en produit alimentaire à cuire

- immersion et circulation dans le liquide en ébullition et/ou friture

- sortie du bain et égouttage

- déversement des portions alimentaires cuites, des paniers dans des assiettes

- reprise du procédé en continu, chargement des paniers...

Selon un autre mode de réalisation le panier suspendu à la roue horizontale, dite roue porte paniers, est guidé non plus par une seule rampe de guidage mais deux rampes. Une rampe de guidage supérieure assure le déplacement dudit panier autour de son point de fixation, au niveau de l'anse et du crochet par rapport à l'axe vertical. Ce déplacement permet de faire entrer, de faire sortir, ledit panier du liquide de cuisson. Une rampe inférieure de guidage assure également le maintien ou l'ouverture de la paroi du fond du panier qui est monté sur charnière. Le panier suspendu est également complètement immergé dans le liquide de cuisson. Cette immersion totale du panier assure une meilleure cuisson des produits du fait du brassage dûà l'ébullition et au déplacement continu dudit panier dans le liquide.

La partie supérieure du panier étant ouverte dans son trajet en immersion totale, le panier passe dans un tunnel dont la paroi supérieure ferme le panier en faisant office de couvercle. Seule une fente médiane disposée de manière adéquate selon l'axe longitudinal du tunnel permet le passage de l'anse ou du bras de suspension qui relie le panier, son crochet et la roue horizontale dite roue porte paniers. Ledit tunnel est percé de trous, il peut ainsi être constitué dans une matière grillagée.

Les résistances chauffantes sont entourées d'une paroi verticale cylindrique perforée. Cette paroi verticale cylindrique perforée assure la circulation du liquide de cuisson en ébullition et le brassage des produits alimentaires à cuire donc une cuisson homogène. Ce brassage et cette circulation sont accentués au passage d'un panier au dessus des résistances chauffantes, d'une part par la paroi verticale cylindrique perforée et, d'autre part par le tunnel immergé.

Le panier est de préférence de forme carrée, la partie supérieure est libre. Les parois latérales sont formées par des armatures ou montants sur lesquels est soudé du grillage. Le fond du panier suspendu est monté sur une charnière libre, sans ressort; il doit donc être maintenu par un moyen pour rester en position fermée. Ledit moyen est la rampe inférieure qui se trouve sous le panier et qui maintient le fond dudit panier fermé. Cette rampe inférieure est quasi parallèle à la rampe supérieure de guidage. Sauf au droit du poste de déchargement de la portion alimentaire du panier, où la rampe inférieure s'interrompt et libère ainsi le fond qui peut s'ouvrir. Aprés le déversement, la rampe inférieure referme progressivement le fond dudit panier et en assure ainsi la fermeture.

Le panier suspendu est tenu par une anse articulée. La tête de l'anse est manchonnée sur un crochet de fixation, fixé à la roue porte panierss.

Un moyen de fermeture et de verrouilage peut empêcher la tête de l'anse de sortir du crochet.

Un carter couvercle est diposé sur la cuve de liquide, afin de réduire le taux d'évaporation, les dépenses d'énergie et augmenter la capacité de chauffe. Ledit carter est échancré en son centre pour permettre le passage des anses de paniers.

Les dessins ci-joints donnés à titre d'exemple indicatif et non limitatif permettront aisément de comprendre l'invention. Ils représentent des modes de réalisation préférés selon l'invention.

La figure 1 est une vue en plan de l'appareil.

La figure 2 est une vue en coupe partielle selon l'axe A-A représenté à la figure 1.

La figure 3 est une vue en coupe partielle selon l'axe B-B représenté à la figure 1.

La figure 4 est une vue en coupe partielle selon l'axe C-C représenté à la figure 1.

La figure 5 est une vue en coupe partielle selon l'axe D-D représenté à la figure 1.

La figure 6 est une vue en coupe partielle selon l'axe E-E représenté à la figure 1.

La figure 7 est une vue d'un autre mode de réalisation du panier avec sa cinématique d'ouverture du fond.

La figure 8 est une vue d'un autre mode de réalistion du panier avec sa cinématique d'ouverture du fond ; dans ce cas, le fond du panier est en deux parties.

La figure 9 est une vue en coupe de l'appareil selon un autre mode de réalisation notamment du panier qui est carré et qui s'ouvre par le fond.

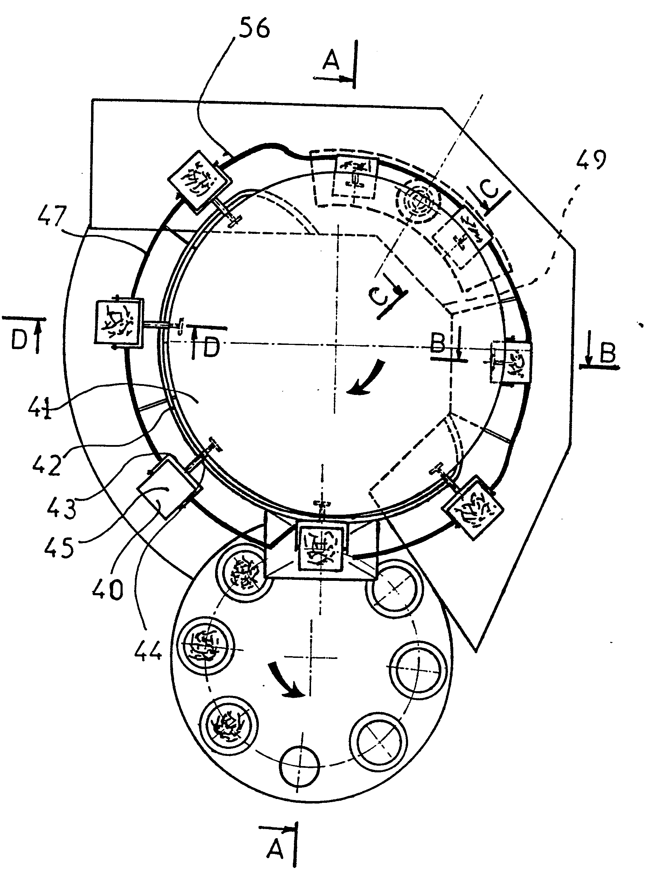

La figure 10 est une vue en plan de l'appareil

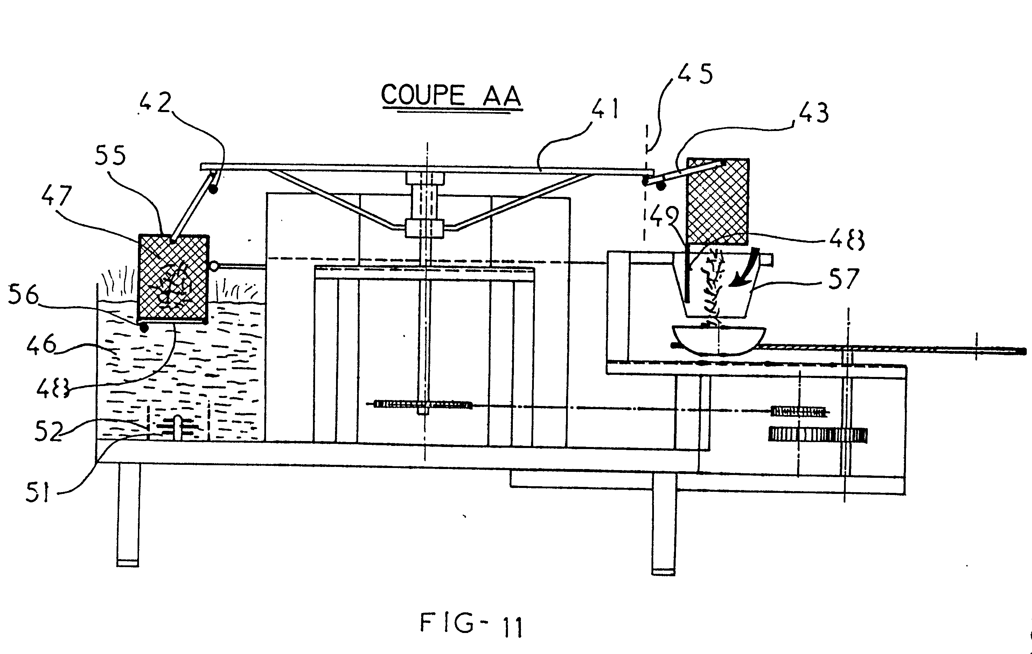

La figure 11 est une vue en coupe selon l'axe AA représenté à la figure 1. Cette vue met en évidence l'entrée du panier suspendu dans le liquide de cuisson et le vidage d'un autre panier suspendu au poste de déchargement.

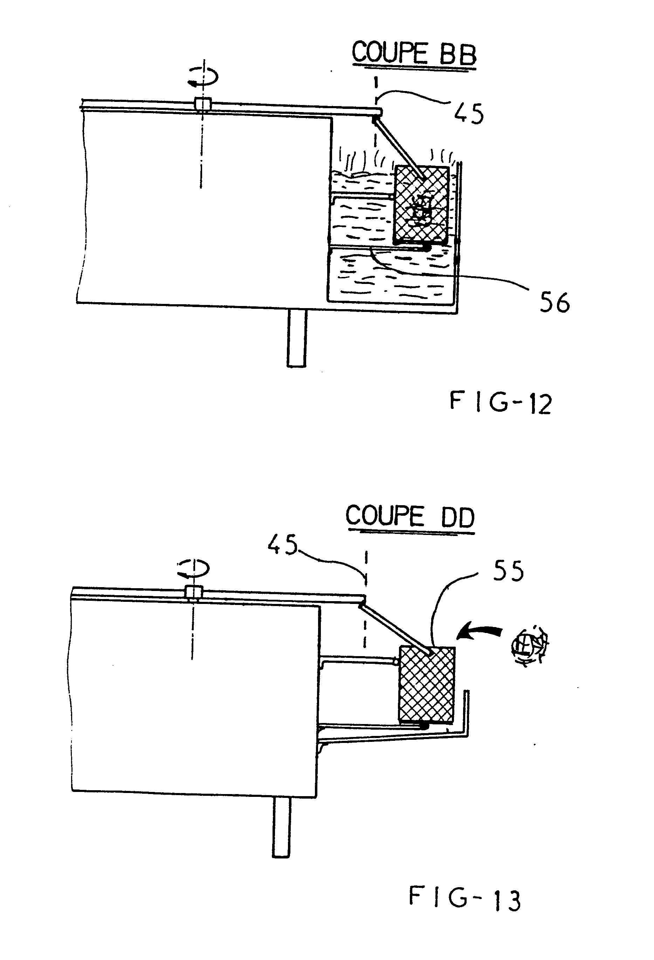

La figure 12 est une vue en coupe selon l'axe BB représenté à la figure 1. Cette vue met en évidence le passage du panier suspendu dans le liquide de cuisson.

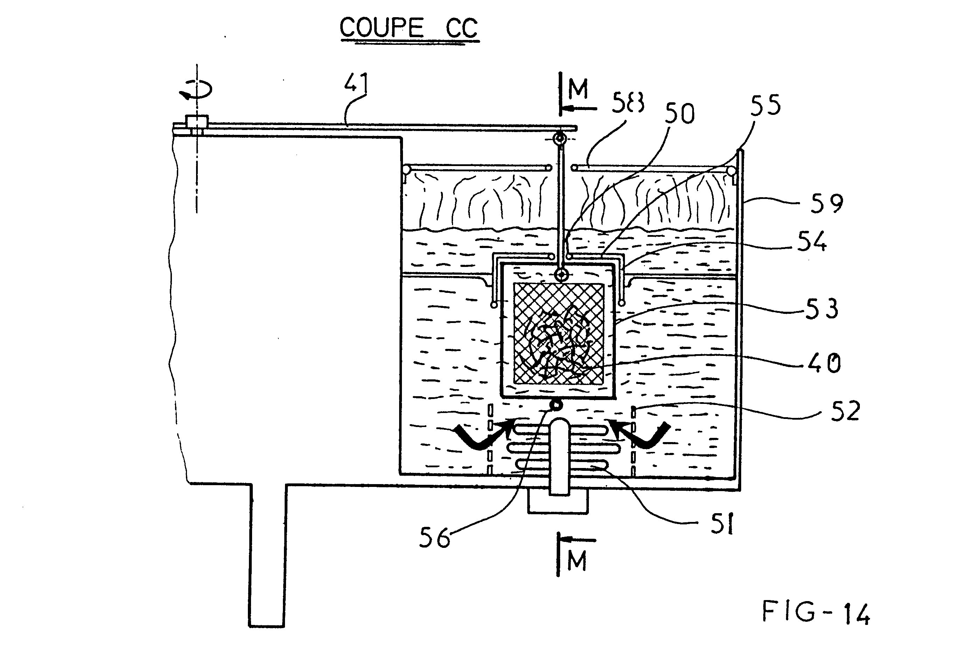

La figure 13 est une vue en coupe selon selon l'axe DD représenté à la figure 1. Cette vue met en évidence la phase de remplissage du panier suspendu.

La figure 14 est une vue en coupe selon l'axe CC représenté à la figure 1. Cette vue met en évidence la phase d'immersion totale du panier suspendu dans le liquide de cuisson.

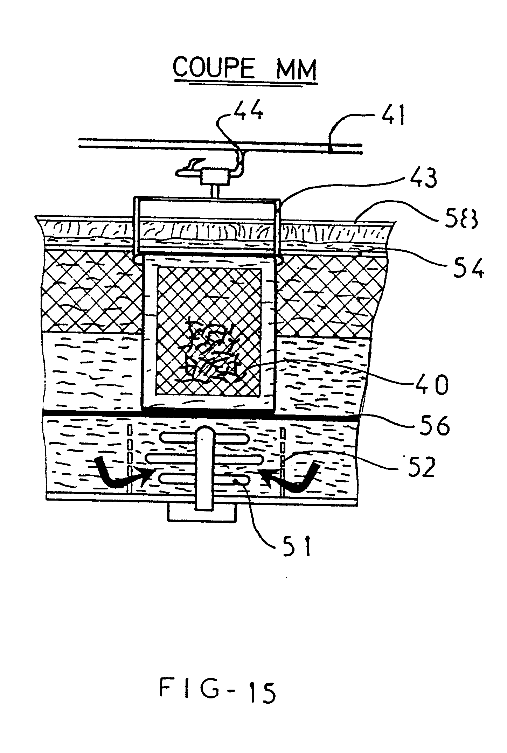

La figure 15 est une vue en coupe selon l'axe MM représenté à la figure 5.

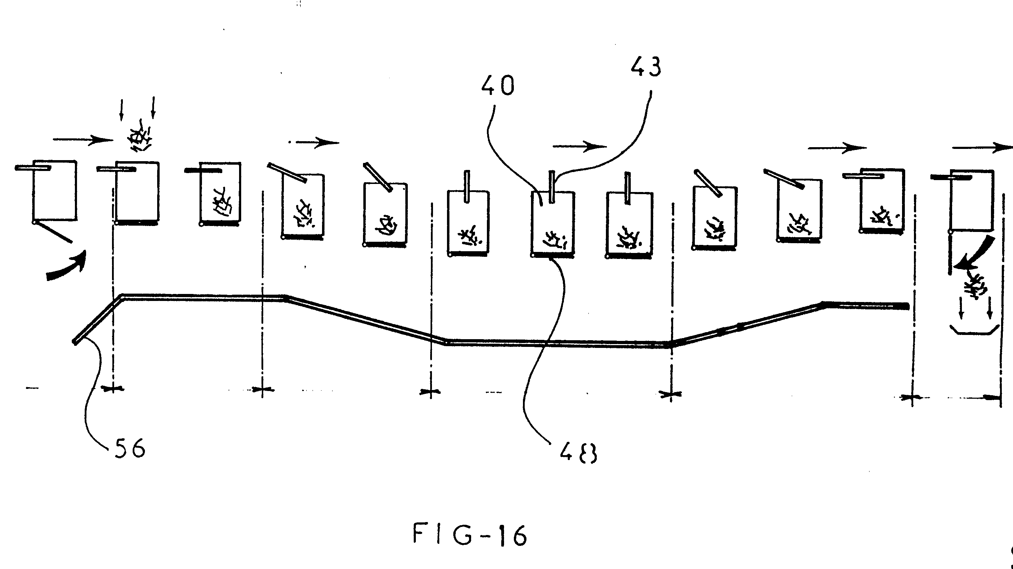

La figure 16 est une vue schématique du panier suspendu et de la rampe inférieure représentée de profil de manière à mettre en évidence les différences de niveau du panier et de la rampe inférieure suivant un cycle complet.

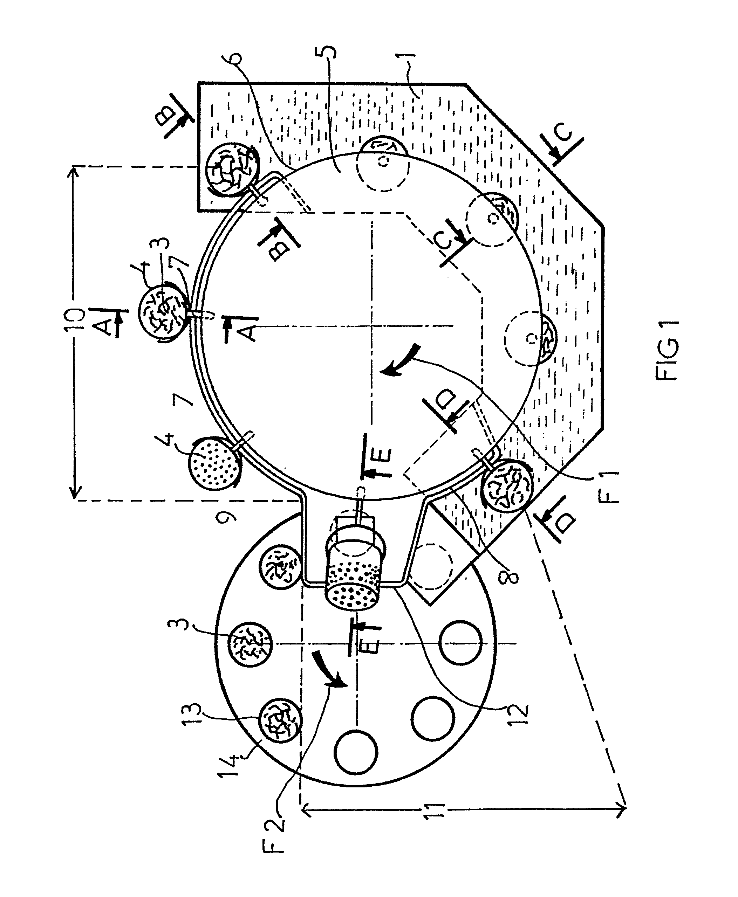

La cuve 1 contient du liquide par exemple de l'huile ou de l'eau qui est chauffé par tous moyens de chauffe 2 (fuel, bois, gaz, électricité). Les portions alimentaires 3 sont disposées manuellement dans des paniers 4. Ces paniers 4 sont portés par un chemin de roulement 5 pour être immergés dans ladite cuve 1, pendant un temps prédétérminé et réglable. Le chemin de roulement est une roue horizontale 5 dite "roue porte paniers", qui est rotative. Lesdits paniers 4 y sont suspendus en "noria" à la périphérie 6 de ladite roue 5 où sont disposés des crochets 7. Dans la figure 1, il y a ainsi huit paniers suspendus 4.

Un passage obligé mécanique 8 oblige les paniers 4 à entrer ou à sortir de la cuve (1) et à venir se vider au-dessus d'un entonnoir de déverse 9. Dans la figure 1, le passage obligé 8 est une rampe de guidage. Dans sa première partie 10, la rampe 8 est inclinée en descendant, de manière à permettre aux paniers 4 de descendre peu à peu dans la cuve 1 ; puis elle remonte dans une seconde partie 11 pour permettre d'égoutter les paniers 4. Enfin, dans la partie 12, la rampe 8 permet de vider les paniers 4 de la portion alimentaire cuite 3, la rampe 8 monte le panier 4 et l'oblige à se dégager de la roue 5, puis à se retourner pour se vider de sa portion alimentaire cuite 3.

Le panier 4 est vidé de sa portion alimentaire cuite 3 dans l'entonnoir de déverse 9.

Sous l'entonnoir 9 se trouve une assiette chaude 13. Ces assiettes 13 sont disposées sur une autre roue horizontale 14, dite roue porte-assiettes, qui est située dans un plan inférieur au plan de la roue porte paniers 5. Cette roue porte-assiettes 14, tourne dans le sens contraire F2 du sens F1 de la roue porte paniers 5. A cet effet, un moteur électrique entraîne, par son axe 15, la roue porte paniers 5, dans le sens F1, tandis qu'un pignon 16 fixé sur ledit axe d'entraînement 15, entraîne par une chaîne 17, un double pignon 18, 19. Ledit pignon 19 fait alors tourner l'axe 20 de la roue porte-assiettes 14 dans le sens F2. Les roues 14 et 5 tournent de manière synchrone, de manière à ce qu'automatiquement une assiette vide 13 vienne se placer sous l'entonnoir de déverse 9, lorsqu'un des paniers 4 se vide. Dans la figure 1, la rampe de guidage 8 permet le retournement dudit panier 4 qui se vide donc par sa partie supérieure, qui est son ouverture. Dans cet exemple de réalisation, le panier est rond.

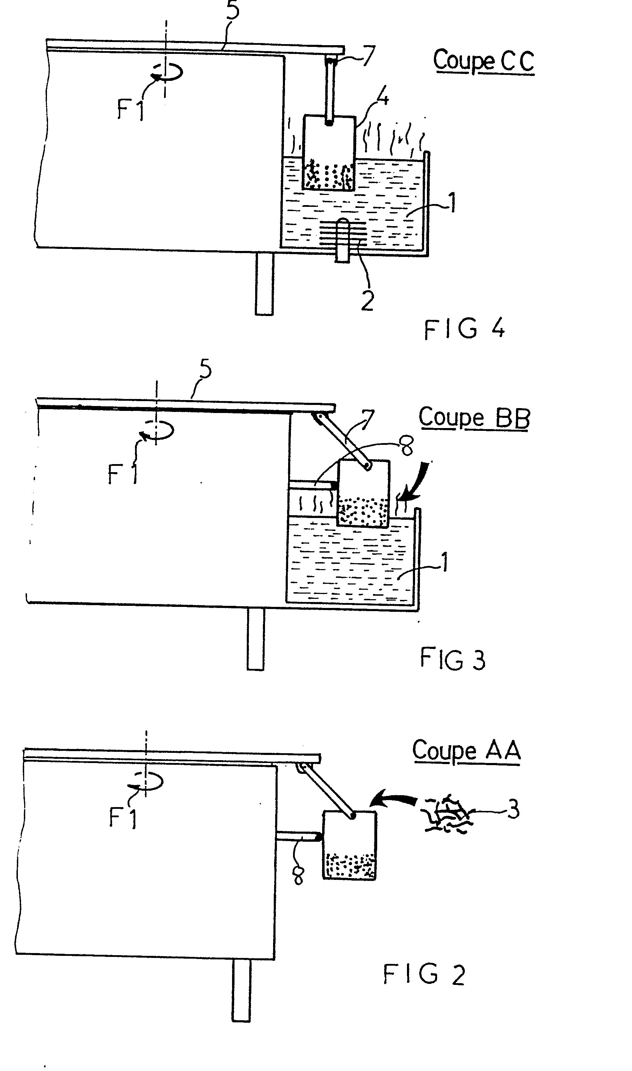

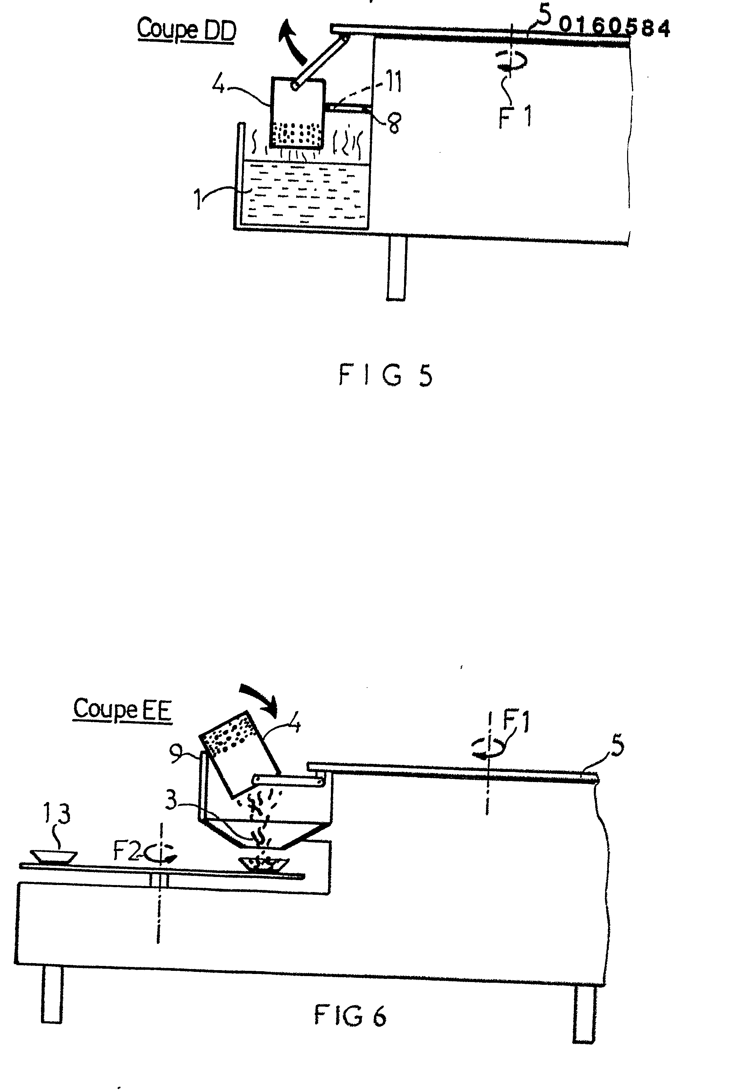

Les figures 2, 3, 4, 5 et 6 permettent de comprendre facilement le fonctionnement et les caractéristiques techniques de l'appareil et ce à différents stades de l'opération.

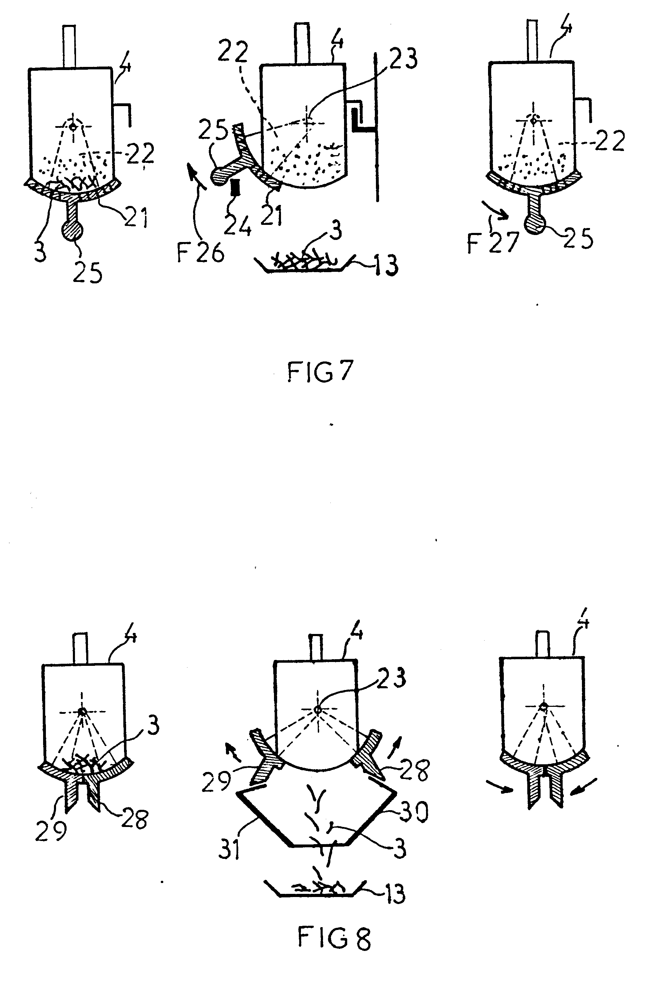

Les figures 7 décrivent un panier 4 qui s'ouvre par le fond. Ce panier comporte un fond 21 amovible, rotatif, maintenu au corps du panier par des flasques 22, fixés sur un axe de rotation 23 du panier 4 par un ergot 25 et fait tourner ledit fond 21 suivant la flèche F26, permettant ainsi à la portion alimentaire 3 de tomber dans l'assiette 13. Le panier suspendu 4 quitte le passage obligé 24 permettant au fond 21 de venir en place par son propre poids, suivant la flèche F27, et de fermer ainsi le panier 4. La figure 8 est une variante du panier 4 représenté à la figure 7, le fond 21 n'est plus en une seule partie formant un arc de cercle, mais en deux parties 28 et 29 qui ouvrent le fond du panier 4 en se dégageant de chaque côté par des passages obligés 30 et 31.

Les chiffres donnés ci-après permettent d'avoir un exemple concret d'un appareil réalisé, de la capacité de cet appareil à cuire des portions alimentaires, de l'allègement des frais d'exploitation en utilisant cet appareil :

- encombrement de l'appareil hors tout: 1,750 m. x1,300 m. x1,075 m.

- poids de l'appareil 300 Kilogrammes environ

- nombre de paniers 4 : seize (huit à dix huit paniers selon la demande)

- capacité des paniers 4 : 50 à 250 grammes de pâtes fraîches

- moyen de chauffe : 3 résistances immergées 6.000 W 220/380 V

- moteur électrique : 280 W 220 V 1.500 TM sur réducteur 1/6 à 4 avec variateur de vitesse.

| Levier vitesse position | Temps rotation complet | Temps cuisson trempage | Un panier toutes les | Portions heure | Kg/Heure portion 150 Gr |
|---|---|---|---|---|---|
| A + 1/2 | 2'4'' | 1' | 9' 4/10 | 384 | 57,600 |
| B | 2'33'' | 1'02'' | 9' 5/10 | 376 | 56,400 |
| C | 2'46'' | 1'06'' | 10' 4/10 | 347 | 52,000 |
| D | 3'16'' | 1'19'' | 12' 2/10 | 294 | 44,100 |
| E | 3'55'' | 1'36'' | 14' 7/10 | 245 | 36,750 |
| F | 4'45'' | 1'57'' | 17' 8/10 | 202 | 30,300 |
| G | 5'35'' | 2'10'' | 20' 9/10 | 172 | 25,800 |
| H - 1/2 | 5'41'' | 2'15'' | 21' 3/10 | 169 | 25,350 |

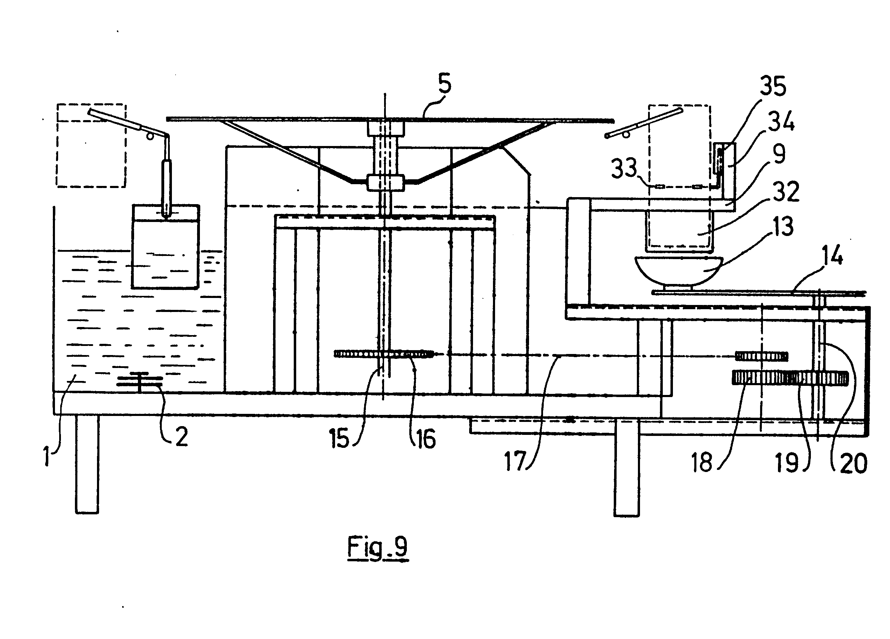

Dans la figure 9, le panier 4 est carré. Le fond 32 est monté sur un axe 33, autour duquel il peut tourner pour ouvrir ledit panier 4. Lors du passage du panier 4 au-dessus de l'entonnoir de déverse 9, un passage obligé tel qu'une came 34 vient buter contre un ergot 35 qui est monté en levier sur ledit axe 33 du fond 32 du panier 4, ledit ergot 35 tourne et

0160584

fait tourner le fond 32 autour de l'axe 33 ce qui ouvre le panier 4, qui déverse ainsi la portion alimentaire cuite 3 dans l'assiette 13.

Selon l'autre mode de réalisation le panier suspendu 40 à la roue horizontale 41, dite roue porte paniers, est guidé non plus par une seule rampe de guidage 42, mais deux rampes. Une rampe de guidage supérieure 42 assure le déplacement dudit panier 40 autour de son point de fixation, au niveau de l'anse 43 et du crochet 44 par rapport à l'axe vertical 45. Ce déplacement permet de faire entrer, de faire sortir, ledit panier 40 du liquide de cuisson 46. Une rampe inférieure 47 assure le maintien ou l'ouverture de la paroi du fond 48 du panier 40 qui est monté sur charnière 49. Le panier suspendu 40 est également complètement immergé dans le liquide de cuisson 46. Cette immersion totale du panier 40 assure une meilleure cuisson des produits alimentaires 47 du fait du brassage dû à l'ébullition et au déplacement continu dudit panier 40 dans le liquide.

La partie supérieure 55 du panier étant ouverte dans son trajet en immersion totale, le panier 40 passe dans un tunnel 54 dont la paroi supérieure 55 ferme le panier 40 en faisant office de couvercle. Seule une fente 50 médiane disposée de manière adéquate selon l'axe longitudinal du tunnel 49 permet le passage de l'anse 43 ou du bras de suspension qui relie le panier 40, son crochet 44 et la roue horizontale 41 dite roue porte paniers. Ledit tunnel 54 est percé de trous, il peut ainsi être constitué dans une matière grillagée.

Les résistances chauffantes 51 sont entourées d'une paroi verticale cylindrique perforée 52. Cette paroi verticale perforée 52 assure la circulation du liquide de cuisson 46 en ébullition et le brassage des produits alimentaires 47 à cuire donc une cuisson homogène. Ce brassage et cette circulation sont accentués au passage d'un panier au dessus des résistances chauffantes, d'une part par la paroi verticale cylindrique perforée et, d'autre part par le tunnel immergé.

Le panier 40 est de préférence de forme carrée, la partie supérieure 55 est libre. Les parois latérales sont formées par des armatures ou montants sur lesquels est soudé du grillage 53. Le fond 48 du panier suspendu 40 est monté sur une charnière libre 49, sans ressort; il doit donc être maintenu par un moyen 56 pour rester en position fermée. Ledit moyen 56 est la rampe inférieure 56 qui se trouve sous le panier 40 et qui maintient le fond 48 dudit panier fermé. Cette rampe inférieure 56 est quasi parallèle à la rampe supérieure de guidage 42. Sauf au droit du poste de déchargement 57 de la portion alimentaire du panier, où la rampe inférieure 56 s'interrompt et libère ainsi le fond 48 qui peut s'ouvrir. Après le déversement, la rampe inférieure 56 referme progressivement le

8

fond 48 dudit panier et en assure ainsi la fermeture. **0160584**

Le panier suspendu 40 est tenu par une anse articulée 43 . La tête de l'anse est manchonnée sur un crochet de fixation 44, fixé à la roue porte paniers 41. Un moyen de fermeture et de verrouilage peut empêcher la tête de l'anse de sortir du crochet 44.

Un carter couvercle 58 est diposé sur la cuve de liquide 59 , afin de réduire le taux d'évaporation, les dépenses d'énergie et augmenter la capacité de chauffe. Ledit carter 58 est échancré en son centre pour permettre le passage des anses 43 de paniers 40.

REVENDICATIONS

0160584

1. Procédé pour cuire automatiquement et en continu des portions alimentaires individuelles, par ébullition et/ou friture, pour la restauration caractérisé par le fait que lesdites portions alimentaires individuelles (3) sont disposées manuellement dans des paniers suspendus (4) "en noria", à la périphérie d'une roue dite roue porte paniers (5), la rotation de ladite roue (5) au dessus d'une cuve (1) et un moyen de guidage (8) tel qu'une rampe de guidage (8), en contact avec le crochet (7) ou le corps du panier (4), assurent la variation d'écartement dudit panier suspendu (4) de son axe vertical passant par le crochet (7), cette variation d'écartement qui permet l'entrée des paniers suspendus (4) dans la cuve, leur sortie, puis leur égouttage et enfin leur retournement pour vidage dans des assiettes (13).

2. Appareil pour cuire automatiquement et en continu des portions alimentaires individuelles, par ébullition et/ou friture, pour la restauration, pour la mise en oeuvre du procédé, caractérisé par le fait des portions alimentaires individuelles (3) sont disposées manuellement dans des paniers suspendus (4) "en noria", à la périphérie d'une roue dite roue porte paniers (5), la rotation de ladite roue (5) au dessus d'une cuve (1) et un moyen de guidage (8) tel qu'une rampe de guidage (8), en contact avec le crochet (7) ou le corps du panier (4), assurent la variation d'écartement dudit panier suspendu (4) de son axe vertical passant par le crochet (7), cette variation d'écartement par rotation de l'axe longitudinal du panier autour de son crochet (7) assure un mouvement vertical qui permet l'entrée des paniers suspendus (4) dans la cuve, leur sortie, puis leur égouttage et enfin leur retournement pour vidage dans des assiettes (13).

3. Appareil pour cuire automatiquement et en continu des portions alimentaires individuelles, par ébullition et/ou friture, pour la restauration, selon l'une quelconque des revendications 1 ou 2 caractérisé par le fait que les paniers suspendus (4) sont ouverts à leur sommet et toutes les autres parois et le fond sont perforés de nombreux trous ; le panier suspendu (4) peut comporter un bras ou ergot (25, 28, 29, 35), qui lorsque celui-ci arrive au niveau du passage obligé (24, 30, 31), actionne un moyen pour vider ledit panier de la portion alimentaire cuite (3).

4. Appareil pour cuire automatiquement et en continu des portions alimentaires individuelles, par ébullition et/ou friture, pour la restauration selon la revendication 2 caractérisé par le fait que la rampe de guidage (8), qui sert de passage obligé au panier suspendu (4) avec lequel il est en contact, soit au niveau du crochet (7) soit au niveau du

0160584

corps du panier (4), permet, en écartant le panier suspendu de la verticale, de le plonger ou de le faire sortir d'un liquide ou de le retourner pour permettre le vidage par la partie supérieure qui est ouverte.

5. Appareil pour cuire automatiquement et en continu des portions alimentaires individuelles, par ébullition et/ou friture, pour la restauration selon l'une quelconque des revendications 2, 3 ou 4 caractérisé par le fait que lesdits paniers suspendus (4) peuvent être suspendus "en noria" à la périphérie d'une roue horizontale, dite roue porte-parniers (5), dont la rotation au-dessus de la cuve (1) et l'action de la rampe de guidage permettent d'immerger lesdits paniers (4), de les faire circuler dans le liquide, puis de les égoutter ; une came (34, disposée sur le passage, des paniers suspendus (4), assure l'ouverture du fond (32) des paniers (4) en basculant le bras (35) qui est fixé sur l'axe (33) qui forme la charnière du fond (32) dudit panier (4).

6. Appareil pour cuire automatiquement et en continu des portions alimentaires individuelles, par ébullition et/ou friture, pour la restauration selon l'une quelconque des revendications 2, 3, 4, ou 5 caractérisé par le fait qu'une autre roue horizontale (15) qui tourne dans le sens contraire (F2) de la première roue porte paniers (5) et qui est disposée dans un plan inférieur, porte les assiettes chaudes (13) qui viennent en regard de l'entonnoir de déverse (9) et ce juste au moment où la portion alimentaire cuite (3) d'un panier est déversée.

7. Appareil pour cuire automatiquement et en continu des portions alimentaires individuelles, par ébullition et/ou friture, pour la restauration selon la revendication 1 caractérisé par le fait que le chemin de roulement est une roue horizontale (5) dite "roue porte paniers", qui est rotative ; lesdits paniers (4) y sont suspendus en "noria" à la périphérie (6) de ladite roue (5) où sont disposés des crochets (7) ; la rampe de guidage (8), en contact avec le crochet ou le corps du panier (4), oblige les paniers (4) à entrer ou à sortir de la cuve (1) et à venir se vider au-dessus d'un entonnoir de déverse (9) uniquement par la variation d'écartement desdits paniers suspendus de leur axe vertical passant par leur crochets de suspension ; dans sa première partie (10), la rampe (8) est inclinée en descendant, de manière à permettre aux paniers (4) de descendre peu à peu dans la cuve (1) ; puis elle remonte dans une seconde partie (11) pour permettre d'égoutter les paniers (4) ; enfin, dans la partie (12), la rampe (8) permet de vider les paniers (4) de la portion alimentaire cuite (3), la rampe (8) monte le panier (4) et l'oblige à se dégager de la roue (5), puis à se retourner

0160584

pour se vider de sa portion alimentaire cuite 3 ; le panier (4) est vidé de sa portion alimentaire cuite (3) dans l'entonnoir de déverse (9) ; sous l'entonnoir (9) se trouve une assiette chaude (13) ; ces assiettes (13) sont disposées sur une autre roue horizontale (14), dite roue porte-assiettes, qui est située dans un plan inférieur au plan de la roue porte paniers (5) ; cette roue porte-assiettes (14), tourne dans le sens contraire (F2) du sens (F1) de la roue porte paniers (5) ; à cet effet, un moteur électrique entraîne, par son axe (15), la roue porte paniers (5), dans le sens (F1), tandis qu'un pignon (1)6 fixé sur ledit axe d'entraînement (15), entraîne par une chaîne (17), un double pignon (18, 19) ; ledit pignon (19) fait alors tourner l'axe (20) de la roue porte-assiettes (14) dans le sens (F2) ; les roues (14) et (5) tournent de manière synchrone, de manière à ce qu'automatiquement une assiette vide (13) vienne se placer sous l'entonnoir de déverse (9), lorsqu'un des paniers (4) se vide.

8. Procédé pour cuire automatiquement et en continu, des portions alimentaires, par ébullition et/ou friture, pour la restauration selon la revendication 1 caractérisé par le fait que les paniers suspendus (40) sont guidés d'une part par une rampe de guidage supérieure (42), en contact avec le crochet (44) ou le corps du panier suspendu (40), qui assure la variation d'écartement dudit panier (40) de son axe vertical (45) passant par ledit crochet (44) et d'autre part par une rampe inférieure (47) qui assure le guidage et le maintien où l'ouverture de la paroi du fond du panier qui est monté libre sur une charnière (49).

9. Appareil pour la mise en oeuvre du procédé selon l'une quelconque des revendications 1 ou 8 caractérisé par le fait qu'il comporte d'une part une rampe de guidage supérieure (42), en contact avec le crochet (44) ou le corps du panier suspendu (40), qui assure la variation d'écartement dudit panier (40) de son axe vertical (45) passant par ledit crochet (44) et d'autre part une rampe inférieure (47) qui assure le guidage et le maintien ou l'ouverture de la paroi du fond du panier qui est monté libre sur une charnière (49).

10. Appareil selon la revendication 9 caractérisé par le fait que la ou les rampes de guidage (42, 47) conduisent les paniers suspendus (40) jusqu'à l'immersion totale dans le liquide de cuisson (46), à ce niveau les paniers suspendus (40) passent dans un tunnel (54) dont la paroi supérieure fait office de couvercle, seule une fente médiane (50) disposée de manière adéquate, selon l'axe longitudinal du tunnel (49), permet le passage de l'anse (43) ou du bras de suspension qui relie le panier (40), son crochet (44) et la roue horizontale (41) porte paniers.

11. Appareil selon la revendication 10 caractérisé par **0160584** tunnel (54) est formé par des parois en matière grillagée.

12. Appareil selon l'une quelconque des revendications 9, 10 ou 11 caractérisé par le fait que les résistances chauffantes (51) sont entourées d'une paroi verticale cylindrique perforée (52) ; cette paroi verticale perforée (52) assure la circulation du liquide de cuisson (46) en ébullition et le brassage des produits alimentaires (47) à cuire donc une cuisson homogène ; ce brassage et cette circulation sont accentués au passage d'un panier au dessus des résistances chauffantes, d'une part par la paroi verticale cylindrique perforée et, d'autre part par le tunnel immergé.

13. Appareil selon l'une quelconque des revendications 9, 10, 11 ou 12 caractérisé par le fait que le panier (40) est de préférence de forme carrée, la partie supérieure (55) est libre ; les parois latérales sont formées par des armatures ou montants sur lesquels est soudé du grillage (53) ; le fond (48) du panier suspendu (40) est monté sur une charnière libre (49), sans ressort ; il doit donc être maintenu par un moyen (56) pour rester en position fermée ; ledit moyen (56) est la rampe inférieure (56) qui se trouve sous le panier (40) et qui maintient le fond (48) dudit panier fermé ; cette rampe inférieure (56) est quasi parallèle à la rampe supérieure de guidage (42) ; sauf au droit du poste de déchargement (57) de la portion alimentaire du panier, où la rampe inférieure (56) s'interrompt et libère ainsi le fond (48) qui peut s'ouvrir ; aprés le déversement, la rampe inférieure (56) referme progressivement le fond (48) dudit panier et en assure ainsi la fermeture.

FIG 1

0160584

Coupe CC

FIG 4

Coupe BB

FIG 3

Coupe AA

FIG 2

Coupe DD

0160584

F I G 5

Coupe EE

FIG 6

0160584

FIG 7

FIG 8

Fig.9

0160584

FIG-10

COUPE AA

FIG-11

0160584

COUPE BB

FIG-12

COUPE DD

FIG-13

COUPE CC

FIG-14

## COUPE MM

FIG-15

FIG-16

Office européen
des brevets

**RAPPORT DE RECHERCHE EUROPEENNE**

**0160584**

Numéro de la demande

EP    85 40 0382

## DOCUMENTS CONSIDERES COMME PERTINENTS

| Catégorie | Citation du document avec indication en cas de besoin des parties pertinentes | Revendication concernee | CLASSEMENT DE LA DEMANDE (Int Cl 4) |
|---|---|---|---|
| Y | US-A-3 635 148   (FENERLY) <br> * En entier * | 1,2 | A 47 J   37/12 <br> A 47 J   27/18 |
| A | --- | 3,4,7 | |
| Y | DE-A-2 227 093   (BARBECUE KING LTD.) <br> * En entier * | 1,2 | |
| A | --- | 8 | |
| A | US-A-3 296 954   (HAUB et al.) <br><br> * En entier * | 1,2,3, 5 | |

| DOMAINES TECHNIQUES RECHERCHES (Int. Cl.4) |
|---|
| A 47 J <br> A 21 B <br> B 65 G |

-----

Le present rapport de recherche a ete etabli pour toutes les revendications

| Lieu de la recherche | Date d achèvement de la recherche | Examinateur |
|---|---|---|
| LA HAYE | 05-06-1985 | SCHARTZ J. |